# EUROPEAN PATENT APPLICATION

(11) **EP 4 804 240 A1**
(43) Date of publication of application: **09.09.2026**
(21) Application number: 24885665.0
(22) Date of filing: 28.10.2024
(51) Int. Cl.: H01M 4/04, H01M 4/13, H01M 50/586, H01M 50/591

(54) **SECONDARY BATTERY ELECTRODE AND SECONDARY BATTERY**

(30) Priority: 31.10.2023 JP 2023186319
(71) Applicant: Panasonic Intellectual Property Management Co., Ltd., Kadoma-shi, Osaka 571-0057 (JP)
(72) Inventor: YASUDA, Ryoichi, Kadoma-shi, Osaka 571-0057 (JP); UTSUMIYA, Kazutoshi, Kadoma-shi, Osaka 571-0057 (JP); KIM, Saeyun, Kadoma-shi, Osaka 571-0057 (JP); KIRIBAYASHI, Hoshimitsu, Kadoma-shi, Osaka 571-0057 (JP)
(74) Representative: Eisenführ Speiser
(86) International application number: PCT/JP2024/038351
(87) International publication number: WO 2025/094892

(57) **Abstract**

An electrode for secondary batteries includes a sheet-shaped electrode current collector, a first electrode mixture layer supported on one main surface of the electrode current collector; and a second electrode mixture layer supported on another main surface of the electrode current collector. An end portion of the electrode includes end portions of the first electrode mixture layer and the second electrode mixture layer and an end portion of the electrode current collector. The end portions of the first electrode mixture layer and the second electrode mixture layer each protrude beyond the end portion of the electrode current collector.

## Description

### [Technical Field]

The present disclosure relates to an electrode for secondary batteries and a secondary battery.

### [Background Art]

A secondary battery includes an electrode group including paired electrodes, and an electrolyte. At least one electrode of the paired electrodes includes a sheet-shaped electrode current collector and an electrode mixture layer supported on a main surface of the electrode current collector. The electrode mixture layer contains an electrode active material that absorbs and releases lithium ions. The electrode group is configured, for example, by winding the paired electrodes with a separator interposed therebetween.

Patent Literature 1 proposes "a battery electrode characterized in that an active material is coated on the surface of a current collector, and an insulating material or an electrode active material mixture is coated on the peripheral portion of the current collector."

### [Citation List]

### [Patent Literature]

Patent Literature 1: Japanese Laid-Open Patent Publication No. H11-111302

### [Summary of Invention]

### [Technical Problem]

The electrode mixture layer at the end portion of the electrode group (electrode) may peel off due to stress caused in association with expansion of the electrode mixture layer, leading to degradation of cycle characteristics of a secondary battery.

### [Solution to Problem]

One aspect of the present disclosure relates to an electrode for secondary batteries, including: an electrode current collector having a sheet shape; a first electrode mixture layer supported on one main surface of the electrode current collector; and a second electrode mixture layer supported on another main surface of the electrode current collector, wherein at least one end portion of the electrode includes end portions of the first electrode mixture layer and the second electrode mixture layer and an end portion of the electrode current collector, and the end portions of the first electrode mixture layer and the second electrode mixture layer each protrude beyond the end portion of the electrode current collector.

Another aspect of the present disclosure relates to a secondary battery including: paired electrodes; and an electrolyte, wherein at least one of the paired electrodes is the electrode for secondary batteries according to the above electrode for secondary batteries.

### [Advantageous Effects of Invention]

According to the present disclosure, degradation of the cycle characteristics of a secondary battery can be suppressed.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

[FIG. 1] FIG.1 is a schematic top view of an example of an electrode for secondary batteries according to an embodiment of the present disclosure.
[FIG. 2] FIG. 2 is a schematic cross-sectional view of an example of a principal part of an electrode for a secondary battery according to an embodiment of the present disclosure.
[FIG. 3] FIG. 3 is a schematic cross-sectional view of another example of a principal part of an electrode for secondary batteries according to an embodiment of the present disclosure.
[FIG. 4] FIG. 4 is a top view of an example of a principal part of a wide electrode current collector prepared for the manufacture of an electrode for a secondary battery.
[FIG. 5] FIG. 5 is a schematic partially cut away perspective view of a secondary battery according to an embodiment of the present disclosure.

### [Description of Embodiments]

Embodiments of the present disclosure are described below by way of examples, but the present disclosure is not limited to the examples described below. In the following description, specific numerical values and materials may be exemplified in some cases, but other numerical values and other materials may be adopted as long as the effects of the present disclosure can be obtained. In the present description, the phrase "a numerical value A to a numerical value B" means to include the numerical value A and the numerical value B, and can be phrased as "a numerical value A or more and a numerical value B or less". In the following description, when the lower and upper limits of numerical values related to specific physical properties, conditions, or the like are mentioned as examples, any of the mentioned lower limits and any of the mentioned upper limits can be combined in any combination as long as the lower limit is not equal to or more than the upper limit.

An electrode for secondary batteries according to an embodiment of the present disclosure includes an electrode current collector having a sheet shape, a first electrode mixture layer supported on one main surface of the electrode current collector, and a second electrode mixture layer supported on the other main surface of the electrode current collector. At least one end portion of the electrode includes end portions of the first electrode mixture layer and the second electrode mixture layer and an end portion of the electrode current collector. The end portions of the first electrode mixture layer and the second electrode mixture layer each protrude beyond the end portion of the electrode current collector.

The electrode mixture layers contain an electrode active material that absorbs and releases lithium ions. The electrode mixture layers expand due to absorption of lithium ions. The electrode may have a current collector exposed portion in part where the electrode mixture layers are not formed. Note that the end portion of the current collector exposed portion is not included in the end portion of the electrode current collector described above.

As a result of each of the end portions of the first electrode mixture layer and the second electrode mixture layer protruding beyond the end portion of the electrode current collector, a gap is formed between the end portion of the first electrode mixture layer and the end portion of the second electrode mixture layer. When stress caused by expansion of the electrode mixture layers is released into the gap formed at the end portion of the electrode, the stress applied to the electrode (end portion of the electrode) is relieved. Thus, peeling off of the electrode mixture layers at the end portion of the electrode group (electrode) due to the stress is suppressed, and degradation of the cycle characteristics is suppressed. In addition, protrusion of the end portions of the electrode mixture layers can protect the end portion of the electrode current collector. For example, in the case of a wound electrode group, formation of the gap at each of the opposite end portions of the band-shaped electrode of the electrode group in the widthwise direction can efficiently suppress peeling off of the electrode mixture layers at the end portions of the electrode group.

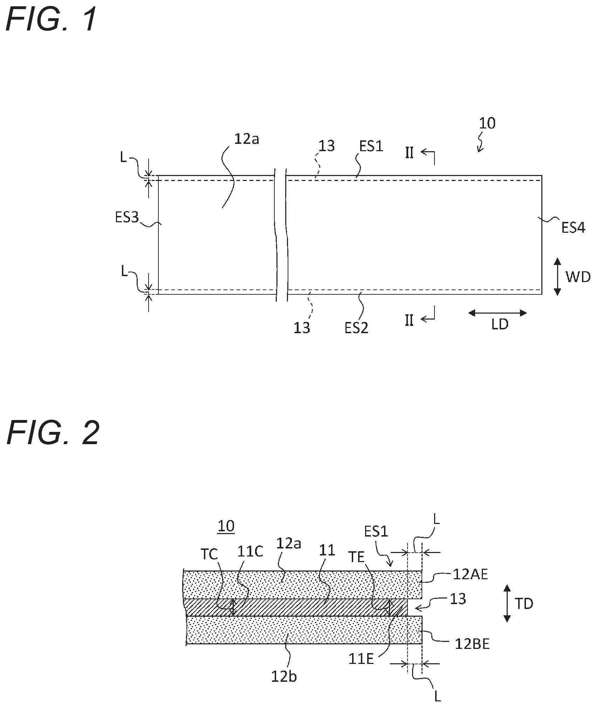

The gap is formed at at least one of the end portions of the electrode. When a rectangular electrode is viewed in the normal direction of the main surface thereof, the electrode has four sides. In this case, the gap may be formed, for example, at an end portion corresponding to at least one of the four sides, may be formed at each of two end portions corresponding to any two of the four sides, or may be formed at each of the four end portions corresponding to the four sides. In the case of the band-shaped electrode of FIG. 1, the gap is formed, for example, at each of end portions ES1 and ES2 (or end portions ES1 to ES4). The gap may be formed continuously along the end portion of the electrode, or may be formed intermittently. When the electrode is viewed in the normal direction of the main surface thereof, the ratio of a total length L1 of the gap formed at one end portion corresponding to one side to a length L0 of the one end portion may be, for example, 80% or more, or may be 100%.

The electrode can be manufactured, for example, by applying an electrode mixture slurry to both main surfaces of a current collector sheet (e.g., a metal foil or an alloy foil), drying the resulting applied films, and performing rolling as necessary, to form a laminate of the current collector sheet and the electrode mixture layers, and performing cutting to a predetermined size. Cutting of the laminate may be performed using a predetermined blade (e.g., a slit blade).

Examples of the laminate cutting include laser processing, plasma processing, and gas cutting processing. The gap may be formed by utilizing melting and solidification of the cut surface in laser processing or the like. The electrode current collector (metal foil or alloy foil) is easier to melt than the electrode mixture layers. Appropriate adjustment of the cutting conditions can form the gap in the cutting process.

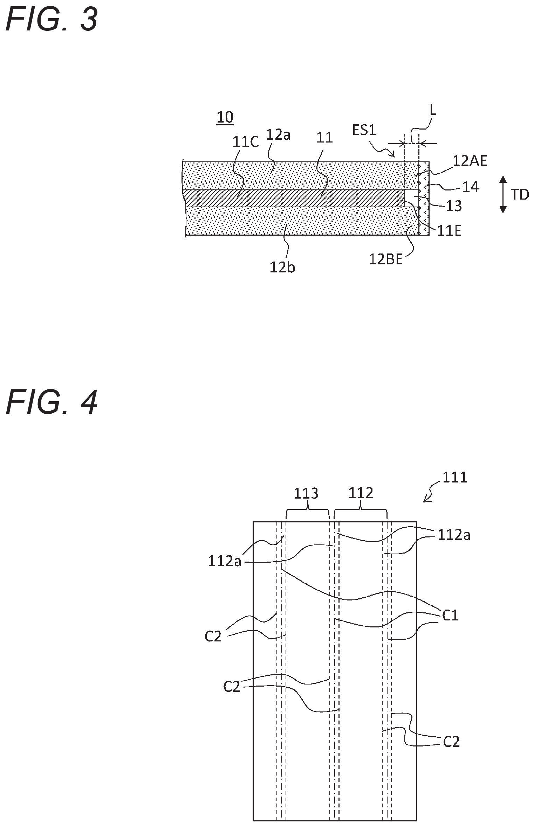

The gap may be formed by heating, using a burner or the like, an end portion of the electrode (the cut surface of the laminate), which is obtained by cutting to a predetermined size using a predetermined blade. In doing so, it is possible to form the gap by selectively melting the end portion of the electrode current collector in a manner that the end portion of the electrode current collector is heated at a temperature within the range in which the end portions of the electrode mixture layers are difficult to melt and the end portion of the electrode current collector is easy to melt. Alternatively, the gap may be formed using a later-described current collector sheet 111 of FIG. 4.

FIG. 1 is a schematic top view of an example of an electrode for secondary batteries according to an embodiment of the present disclosure. The electrode in FIG. 1 is band shaped. In FIG. 1, LD indicates the longitudinal direction of a band-shaped electrode 10, and WD indicates the widthwise direction of the band-shaped electrode 10. FIG. 2 is a schematic cross-sectional view of an example of a principal part of an electrode for secondary batteries according to an embodiment of the present disclosure. FIG. 2 illustrates the principal part (vicinity of an end portion ES1 of the electrode 10) in a cross section taken along a line II-II of the electrode 10 in FIG. 1. TD in FIG. 2 indicates the thickness direction of an electrode current collector 11. FIG. 3 is a schematic cross-sectional view of another example of the principal part of an electrode for secondary batteries according to an embodiment of the present disclosure.

The band-shaped electrode 10 includes a sheet-shaped electrode current collector 11 and electrode mixture layers 12a and 12b supported on the respective surfaces of the electrode current collector 11. The electrode 10 has opposite end portions ES1 and ES2 in the widthwise direction (WD direction) and opposite end portions ES3 and ES4 in the longitudinal direction (LD direction).

As illustrated in FIG. 2, the end portion ES1 of the electrode 10 includes end portions 12AE and 12BE of the first electrode mixture layer 12a and the second electrode mixture layer 12b and an end portion 11E of the electrode current collector 11. The end portions 12AE and 12BE of the first electrode mixture layer 12a and the second electrode mixture layer 12b each protrude beyond the end portion 11E of the electrode current collector 11. In the above configuration, a gap 13 is formed along the end portion ES1 between the end portion 12AE of the first electrode mixture layer 12a and the end portion 12BE of the second electrode mixture layer 12b, as illustrated in FIGS. 1 and 2.

The gap 13 is also formed at the end portion ES2 of the electrode 10, similarly to the end portion ES1. That is, the end portion ES2 of the electrode 10 includes end portions 12AE and 12BE of the first electrode mixture layer 12a and the second electrode mixture layer 12b and an end portion 11E of the electrode current collector 11. The end portions 12AE and 12BE of the first electrode mixture layer 12a and the second electrode mixture layer 12b each protrude beyond the end portion 11E of the electrode current collector 11 also at the end portion ES2, similarly to the end portion ES1. In the above configuration, the gap 13 is formed along the end portion ES2, as illustrated in FIG. 1, between the end portion 12AE of the first electrode mixture layer 12a and the end portion 12BE of the second electrode mixture layer 12b.

In FIG. 2, TE denotes the thickness of the end portion 11E of the electrode current collector 11, and TC denotes the thickness of a portion 11C of the electrode current collector 11 that is located inside the end portion 11E thereof. Although TE is approximately the same as TC in FIG. 2, TE may be larger than TC. When TE is larger than TC, it is easy to sufficiently ensure the distance between the end portion 12AE of the first electrode mixture layer 12a and the end portion 12BE of the second electrode mixture layer 12b, and it is easy to form the gap 13. For example, when cutting the laminate of the electrode current collector and the electrode mixture layers by laser processing or the like, the end portion 11E having a thickness TE larger than the thickness TC can be formed by melting and solidifying the end portion (cut portion) of the electrode current collector. The thickness of the electrode 10 is, for example, 100 µm or more and 300 µm or less (or 200 µm or less). TC is 5 to 20 µm, for example. TE is 1 to 5 times TC, for example.

Respective protrusion lengths L of the end portions 12AE and 12BE of the first electrode mixture layer 12a and the second electrode mixture layer 12b from the end portion 11E of the electrode current collector 11 are each preferably 20 µm or more, and may be 20 µm or more and 180 µm or less. In these cases, it is easy to sufficiently ensure the gap 13 and to suppress degradation of the cycle characteristics. The protrusion lengths L are, for example, 1/10,000 to 1/1000 times the length of the electrode current collector 11 in the widthwise direction (WD direction). The protrusion lengths L are, for example, 2 to 15 times the thickness TE of the end portion 11E of the electrode current collector 11.

The protrusion length L of the end portion 12AE of the first electrode mixture layer 12a from the end portion 11E of the electrode current collector 11 is approximately the same as the protrusion length L of the end portion 12BE of the second electrode mixture layer 12b from the end portion 11E of the electrode current collector 11 in FIG. 2, but may be different therefrom. The protrusion length L on the end portion ES1 side is approximately the same as the protrusion length L on the end portion ES2 side in FIG. 1, but may be different therefrom. The protrusion lengths L are each determined by observing a cross section of the electrode in the thickness direction and measuring the protrusion length of the end portion of the corresponding electrode mixture layer from the end portion of the electrode current collector. Observation of the cross section of the electrode in the thickness direction can be performed, for example, using a scanning electron microscope (SEM).

The gap 13 formed at each of the end portions ES1 and ES2 of the electrode 10 is formed continuously and entirely along the LD direction, but may be formed intermittently or partially. The ratio (gap formation rate in the LD direction) of the length of the portion in the LD direction where the gap 13 is formed at the end portion ES1 (or the end portion ES2) to the length of the electrode 10 in the LD direction is approximately 100%, but is not limited thereto. The gap formation rate in the LD direction may be 80% or more, for example.

Furthermore, the band-shaped electrode 10 has opposite end portions ES3 and ES4 in the longitudinal direction (LD direction). In a wound electrode group, one of the end portions ES3 and ES4 of the electrode 10 is the end portion on a winding start side, and the other of the end portions ES3 and ES4 of the electrode 10 is the end portion on a winding end side. The gap may be formed also at each of the end portions ES3 and ES4, similarly to the end portions ES1 and ES2.

As illustrated in FIG. 3, the electrode 10 may include coating layers 14 that cover the respective end portions ES1 and ES2 of the electrode 10 having gaps 13. In this case, the coating layers 14 are formed to cover the openings of the gaps 13. In the above configuration, the coating layers 14 can protect the end portions (exposed surfaces) of the electrode current collector 11, while ensuring the gaps 13. Occurrence of internal short circuits caused due to the electrode current collector being exposed at the electrode end portions can be suppressed. When the electrode is a negative electrode, lithium dendrite deposition on the end surface of the electrode current collector and internal short circuits caused thereby can be suppressed. In Patent Literature 1, although the electrode end surfaces are coated with an insulating material or the like, the stress applied to the electrode end portions cannot be relieved since a gap 13 is not provided.

From the viewpoint of protecting the electrode current collector 11, the thickness of the coating layers 14 may be 1 µm or more, or may be 1 µm or more and 200 µm or less. The thickness of each coating layer can be determined by observing a cross section of the electrode in the thickness direction using a SEM or the like, measuring the thickness of the coating layer at several points, and calculating the average value thereof.

The coating layers may contain the same components as the electrode mixture layers. Alternatively, the coating layers may be insulating layers. The insulating layers contain a resin material. Examples of the resin material include fluorocarbon resins (e.g., polyvinylidene fluoride and polytetrafluoroethylene).

There is no particular limitation on a coating layer formation method. The coating layers may each be formed by applying a treatment liquid to a corresponding one of the end portions of the electrode, followed by drying. The coating layers may each be formed by dipping a corresponding one of the electrode end portions in the treatment liquid, followed by drying. The treatment liquid contains an electrode mixture or an insulating material, and a dispersion medium or a solvent. N-methyl-2-pyrrolidone (NMP) is used, for example, as the dispersion medium or the solvent. There is no particular limitation on a coating method. Examples of the coating method include dispenser coating and spray coating. There is no particular limitation on a drying method. Natural drying may be performed, or drying may be performed using a drying furnace. Examples of the electrode mixture include the positive electrode mixture or the negative electrode mixture, each described later. Examples of the insulating material include those exemplified above.

The electrode 10 illustrated in FIG. 1 may be produced with the wide current collector sheet 111 illustrated in FIG. 4. FIG. 4 is a top view of an example of a principal part of the wide current collector sheet prepared when producing an electrode for secondary batteries. Reference sign C1 indicated by the dashed-dotted lines in FIG. 4 denotes a cut portion that is to be cut together with the electrode mixture layers during slitting. Reference sign C2 indicated by the dashed lines in FIG. 4 denotes perforations formed in advance in the current collector sheet 111. A region 112 in FIG. 4 indicates a portion to be the electrode current collector A described later. A region 113 indicates a portion to be the electrode current collector B described later.

The following describes a method of producing the electrode 10 with the current collector sheet 111.

An electrode mixture slurry is applied to both surfaces of the current collector sheet 111 in FIG. 4. The resulting applied films are dried, and rolled as necessary, to form electrode mixture layers. In the manner described above, a laminate in which the electrode mixture layer is formed on both surfaces of the current collector sheet 111 is obtained. The current collector sheet 111 is cut into band-shaped pieces along the cut portions C1 together with the electrode mixture layers using a slit blade. In the manner described above, a plurality of band-shaped laminates including the electrode current collector A (a portion corresponding to the region 112) are obtained. Next, opposite end portions 112a (portions from the perforations C2 to the corresponding cut portions C1 in FIG. 4) of the electrode current collector A (region 112) in the widthwise direction are cut off along the perforations C2 to obtain band-shaped laminates including the electrode current collector B (a portion corresponding to the region 113). That is, the band-shaped electrodes 10 each having the gaps 13 are obtained by cutting off the opposite end portions 112a.

A secondary battery according to an embodiment of the present disclosure includes paired electrodes and an electrolyte. At least one of the paired electrodes is the electrode for secondary batteries according to an embodiment of the present disclosure. One of the paired electrodes is a positive electrode, and the other of the paired electrodes is a negative electrode. The paired electrodes (the positive electrode and the negative electrode) are, for example, wound or stacked with a separator therebetween.

Examples of the secondary batteries include nonaqueous electrolyte secondary batteries such as lithium-ion secondary batteries, lithium-metal secondary batteries, and solid-state batteries containing a gel electrolyte or a solid electrolyte. That is, the secondary batteries may be liquid secondary batteries including an electrolyte solution as the electrolyte, or may be all-solid-state secondary batteries including a solid electrolyte.

A detailed description is given below of each component of a secondary battery.

### [Positive Electrode]

The positive electrode includes a positive electrode current collector and a positive electrode mixture layer supported on the positive electrode current collector. The positive electrode mixture layer is formed of a positive electrode mixture. The positive electrode mixture layer is supported on one or both main surfaces of the positive electrode current collector.

The positive electrode mixture contains a positive electrode active material as an essential component, and may contain, for example, a binder, a conductive agent, and a thickener, as optional components. The positive electrode active material may be a material that reversibly absorbs and releases lithium ions. The positive electrode active material may be a lithium-containing transition metal oxide, for example. Examples of the transition metal include Ni, Co, and Mn. Typical examples of the lithium-containing transition metal oxide include lithium cobalt oxide and lithium nickel oxide that have a layered rock-salt type crystal structure.

The positive electrode mixture layer can be formed, for example, by applying a positive electrode mixture slurry containing the positive electrode mixture and a dispersion medium to a surface of the positive electrode current collector, followed by drying. The resulting applied film after drying may be rolled, if necessary. The positive electrode mixture layer may be formed on one surface of the positive electrode current collector, or on both surfaces thereof. As the dispersion medium of the positive electrode mixture slurry, N-methyl-2-pyrrolidone (NMP) is used, for example.

Examples of the lithium-containing transition metal oxide include LiₐCoO₂, LiₐNiO₂, LiₐMnO₂, LiₐCo_{b}Ni_{1-b}O₂, LiₐCo_{b}M_{1-b}O_{c}, LiₐNi_{1-b}M_{b}O_{c}, LiₐMn₂O₄, LiₐMn_{2-b}M_{b}O₄, LiNPO₄, and Li₂MPO₄F (where M is at least one selected from the group consisting of Na, Mg, Sc, Y, Mn, Fe, Co, Ni, Cu, Zn, Al, Cr, Pb, Sb, and B). Here, 0 < a ≤ 1.2, 0 < b ≤ 0.9, and 2.0 ≤ c ≤ 2.3. Note that the value "a" indicating the molar ratio of lithium is increased or decreased during charging and discharging.

Alternatively, the lithium-containing transition metal oxide may be LiₐNi_{b}M_{1-b}O₂ (where M is at least one selected from the group consisting of Mn, Co, and Al, 0 < a ≤ 1.2, and 0.3 ≤ b < 1). From the viewpoint of increasing the capacity, it is more preferable to satisfy 0.85 ≤ b < 1. From the viewpoint of stability of the crystal structure, LiₐNi_{b}Co_{c}Al_{d}O₂ containing Co and Al each as M (where 0 < a ≤ 1.2, 0.85 ≤ b < 1, 0 < c < 0.15, 0 < d ≤ 0.1, and b + c + d = 1) may be used.

The binder may be a resin material, examples of which include: fluorocarbon resins such as polytetrafluoroethylene and polyvinylidene fluoride (PVDF); polyolefin resins such as polyethylene and polypropylene; polyamide resins such as aramid resin; polyimide resins such as polyimide and polyamideimide; acrylic resins such as polyacrylic acid, polymethyl acrylate, and ethylene-acrylic acid copolymers; vinyl resins such as polyacrylonitrile and polyvinyl acetate; polyvinylpyrrolidone; and polyethersulfone. One binder may be used alone, or two or more binders may be used in combination.

Examples of the conductive agent include carbon materials such as graphite, carbon black such as acetylene black, and carbon fibers (carbon nanotubes (CNTs) and carbon fibers other than CNTs). One conductive agent may be used alone, or two or more conductive agents may be used in combination.

Examples of the positive electrode current collector that can be used include non-porous conductive substrates (e.g., a metal foil) and porous conductive substrates (e.g., a mesh, a net, and a punched sheet). Examples of the material of the positive electrode current collector include stainless steel, aluminum, aluminum alloys, and titanium. The thickness of the positive electrode current collector is not particularly limited, and may be preferably 1 to 50 µm, and more desirably 5 to 20 µm.

### [Negative Electrode]

The negative electrode may be a negative electrode on which lithium metal is deposited during charging, or a negative electrode that absorbs lithium ions during charging.

The negative electrode includes a band-shaped negative electrode current collector. The negative electrode may include a negative electrode current collector and a negative electrode mixture layer supported on the negative electrode current collector. The negative electrode mixture layer is formed of a negative electrode mixture. The negative electrode mixture layer is supported on one or both main surfaces of the negative electrode current collector.

The negative electrode mixture contains a negative electrode active material as an essential component, and may contain, for example, a binder, a conductive agent, and a thickener as optional components. The negative electrode mixture layer can be formed, for example, by applying a negative electrode mixture slurry containing a negative electrode mixture and a dispersion medium to a surface of the negative electrode current collector, followed by drying. The resulting applied film after drying may be rolled, if necessary. The negative electrode mixture layer may be formed on one of the surfaces of the negative electrode current collector, or on both surfaces thereof.

The negative electrode active material may be a material that reversibly absorbs and releases lithium ions. Alternatively, the negative electrode active material may be lithium metal or a lithium alloy. That is, the negative electrode mixture layer may be a negative electrode active material layer made of lithium metal or a lithium alloy, in the form of a foil.

Examples of the negative electrode active material that absorbs and releases lithium ions include carbon materials, metal materials such as Si and Sn, alloy materials containing, for example, Si or Sn, metal compounds containing, for example, Si or Sn, and metal oxides containing lithium. Examples of the metal oxides containing lithium include spinel-type lithium titanium oxide and spinel-type lithium manganese oxide.

Examples of the carbon materials include graphite, graphitizable carbon (soft carbon), and non-graphitizable carbon (hard carbon). Among these, graphite, which is excellent in stability during charging and discharging and has small irreversible capacity, is preferable.

Graphite refers to a carbon material having an interplanar spacing d002 of the (002) plane measured by X-ray diffraction of, for example, 0.340 nm or less. The crystallite size Lc(002) of the graphite measured by X-ray diffraction may be, for example, 5 nm or more, 5 nm or more and 300 nm or less, or 10 nm or more and 200 nm or less.

Alternatively, the negative electrode active material may be a composite material containing Si. The composite material containing Si has a high capacity and is suitable as a negative electrode active material. The composite material includes a silicon phase. Silicon can reversibly form an alloy with lithium. The composite material is a material that can reversibly absorb and release lithium ions.

The composite material includes silicon phases and a matrix phase in which the silicon phases are dispersed. The matrix phase only needs to be formed of a material having lithium ion conductivity. The matrix phase includes, for example, at least one selected from the group consisting of a silicon oxide phase and a carbon phase.

The silicon oxide phase contains Si and O, and may further contain a third element other than Si and O. The silicon oxide phase may be formed of SiO₂, lithium silicate, or both of these. The lithium silicate can be represented by, for example, Liz_{y}SiO_{2+y} (0 < y < 2). A composite material in which the silicon oxide phase is formed of SiO₂ can be represented by SiOₓ (0.5 ≤ x ≤ 1.6).

When a carbon material and a composite material are used in combination, the proportion of the composite material in the negative electrode active material (sum of the carbon material and the composite material) is, for example, 1% by mass or more and 20% by mass or less, may be 3% by mass or more and 15% by mass or less, or 3% by mass or more and 10 % by mass or less. In these cases, improvement in cycle characteristics and increase in capacity tend to be achieved in a well-balanced manner.

Examples of the binder include resin materials, examples of which include: fluorocarbon resins such as polytetrafluoroethylene and polyvinylidene fluoride (PVDF); polyolefin resins such as polyethylene and polypropylene; polyamide resins such as aramid resin; polyimide resins such as polyimide and polyamideimide; acrylic resins such as polyacrylic acid, polymethyl acrylate, and ethylene-acrylic acid copolymers; vinyl resins such as polyacrylonitrile and polyvinyl acetate; polyvinylpyrrolidone; polyethersulfone; and rubber-like materials such as styrene-butadiene copolymer rubber (SBR). A binder may be used alone or two or more binders may be used in combination.

Examples of the conductive agent include carbons such as acetylene black, carbon fibers (carbon nanotubes (CNTs) and carbon fibers other than CNTs), metal fibers, and metal powders such as aluminum. One conductive agent may be used alone, or two or more conductive agents may be used in combination.

Examples of the thickener include carboxymethyl cellulose (CMC) and modified products thereof (including salts such as Na salt), cellulose derivatives (e.g., cellulose ether) such as methyl cellulose; and saponified products of polymers having a vinyl acetate unit, such as polyvinyl alcohol. One thickener may be used alone, or two or more thickeners may be used in combination.

As the negative electrode current collector, a non-porous conductive substrate (e.g., a metal foil) or a porous conductive substrate (e.g., a mesh, a net, or a punched sheet) is used. Examples of the material of the negative electrode current collector include stainless steel, nickel, nickel alloys, copper, and copper alloys. The thickness of the negative electrode current collector is not particularly limited, and is preferably 1 to 50 µm, and more desirably 5 to 20 µm.

### [Electrolyte]

The electrolyte may be a liquid electrolyte (electrolyte solution), a gel electrolyte, or a solid electrolyte. The liquid electrolyte is, for example, an electrolyte solution containing a nonaqueous solvent and a salt dissolved in the nonaqueous solvent. The concentration of the salt in the electrolyte solution is 0.5 mol/L or more and 2 mol/L or less, for example. The electrolyte solution may contain a known additive.

The gel electrolyte contains a salt and a matrix polymer, or contains a salt, a nonaqueous solvent, and a matrix polymer. As the matrix polymer, a polymer material that absorbs a nonaqueous solvent to gel is used, for example. Examples of the polymer material include fluorocarbon resin, acrylic resin, polyether resin, and polyethylene oxide.

As the solid electrolyte, a material (e.g., an oxide-based solid electrolyte, a sulfide-based solid electrolyte, or a halide-based solid electrolyte) known in the field of, for example, all-solid-state lithium-ion secondary batteries is used, for example.

For example, a liquid nonaqueous electrolyte is prepared by dissolving a salt in a nonaqueous solvent. The salt is an electrolyte salt that ionically dissociates in the electrolyte, and can include, for example, a lithium salt. Various additives may be contained in the electrolyte. The electrolyte is usually used in a liquid state, but may be in a state where fluidity is restricted by a gelling agent or the like.

Examples of the nonaqueous solvent include cyclic carbonates, chain carbonates, cyclic carboxylic acid esters, and chain carboxylic acid esters. Examples of the cyclic carbonates include propylene carbonate (PC) and ethylene carbonate (EC). A cyclic carbonate having an unsaturated bond, such as vinylene carbonate (VC), may be used. A cyclic carbonate having a fluorine atom, such as fluoroethylene carbonate (FEC), may be used. Examples of the chain carbonates include diethyl carbonate (DEC), ethyl methyl carbonate (EMC), and dimethyl carbonate (DMC). Examples of the cyclic carboxylic acid esters include γ-butyrolactone (GBL) and γ-valerolactone (GVL). Examples of the chain carboxylic acid esters include methyl formate, ethyl formate, propyl formate, methyl acetate, ethyl acetate, propyl acetate, methyl propionate, ethyl propionate, and propyl propionate. One nonaqueous solvent may be used alone, or two or more nonaqueous solvents may be used in combination.

Examples of the lithium salt include LiClO₄, LiBF₄, LiPF₆, LiAlCl₄, LiSbF₆, LiSCN, LiCF₃SO₃, LiCF₃CO₂, LiAsF₆, LiB₁₀Cl₁₀, lithium lower aliphatic carboxylate, LiCl, LiBr, LiI, borates, and imide salts. Examples of the borates include lithium bis(1,2-benzenediolate(2-)-O,O')borate, lithium bis(2,3-naphthalenediolate(2-)-O,O')borate, lithium bis(2,2'-biphenyldiolate(2-)-O,O')borate, and lithium bis(5-fluoro-2-olate-1-benzenesulfonate-O,O')borate. Examples of the imide salts include lithium bis(fluorosulfonyl)imide (LiN(FSO₂)₂), lithium bis(trifluoromethanesulfonyl)imide (LiN(CF₃SO₂)₂), lithium (trifluoromethanesulfonyl)(nonafluorobutanesulfonyl)imide (LiN(CF₃SO₂)(C₄F₉SO₂)), and lithium bis(pentafluoroethanesulfonyl)imide (LiN(C₂F₅SO₂)₂). One lithium salt may be used alone, or two or more lithium salts may be used in combination. The concentration of the lithium salt in the nonaqueous electrolyte is 0.5 mol/L or more and 2 mol/L or less, for example.

### [Separator]

It is desirable to provide a separator between the positive electrode and the negative electrode. The separator is excellent in ion permeability and has moderate mechanical strength and insulating properties. As the separator, a microporous thin film, a woven fabric, or a nonwoven fabric can be used, for example. As the material of the separator, a polyolefin such as polypropylene or polyethylene is preferable.

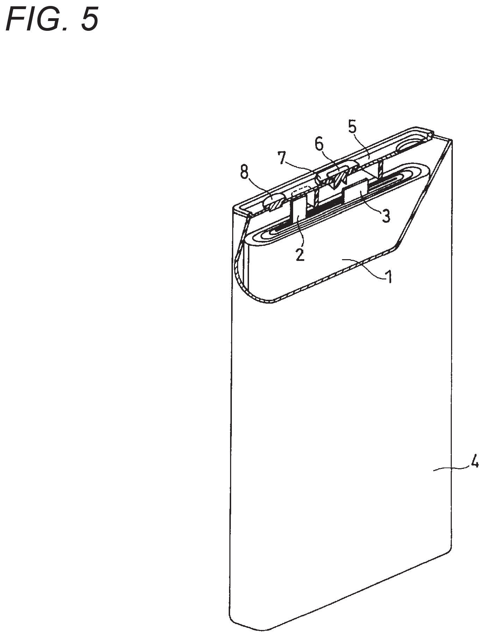

Hereinafter, the configuration of a prismatic secondary battery is described as an example of a secondary battery according to an embodiment of the present disclosure with reference to FIG. 5. FIG. 5 is a schematic partially cut away perspective view of the secondary battery according to the embodiment of the present disclosure.

The battery includes a bottomed prismatic battery case 4 and an electrode group 1 and nonaqueous electrolyte (not illustrated) each housed in the battery case 4. The electrode group 1 includes an elongated band-shaped negative electrode, an elongated band-shaped positive electrode, and a separator that is provided therebetween to prevent direct contact. The electrode group 1 is formed by winding the negative electrode, the positive electrode, and the separator around a flat winding core and removing the winding core. At least one of the positive electrode and the negative electrode is the electrode for secondary batteries according to the embodiment of the present disclosure.

One end of a negative electrode lead 3 is attached to the negative electrode current collector, for example, by welding. The other end of the negative electrode lead 3 is electrically connected to a negative electrode terminal 6 provided on a sealing plate 5 via a resin-made insulating plate (not illustrated). The negative electrode terminal 6 is insulated from the sealing plate 5 by a resin-made gasket 7. One end of a positive electrode lead 2 is attached to the positive electrode current collector, for example, by welding. The other end of the positive electrode lead 2 is connected to the rear surface of the sealing plate 5 via the insulating plate. That is, the positive electrode lead 2 is electrically connected to the battery case 4 serving also as a positive electrode terminal. The insulating plate separates the electrode group 1 and the sealing plate 5 and separates the negative electrode lead 3 and the battery case 4. The periphery of the sealing plate 5 is fitted to the opening end of the battery case 4, and the fitting portion is laser welded. Thus, the opening of the battery case 4 is sealed with the sealing plate 5. The nonaqueous electrolyte injection hole formed in the sealing plate 5 is closed by a sealing plug 8.

### <<Supplemental Note>>

According to the above description of the embodiments, the following techniques are disclosed.

### (Technique 1)

An electrode for secondary batteries including:
an electrode current collector having a sheet shape; a first electrode mixture layer supported on one main surface of the electrode current collector; and a second electrode mixture layer supported on another main surface of the electrode current collector, wherein
at least one end portion of the electrode includes end portions of the first electrode mixture layer and the second electrode mixture layer and an end portion of the electrode current collector, and
the end portions of the first electrode mixture layer and the second electrode mixture layer each protrude beyond the end portion of the electrode current collector.

### (Technique 2)

The electrode for secondary batteries according to Technique 1, wherein a gap is formed between the end portion of the first electrode mixture layer and the end portion of the second electrode mixture layer.

### (Technique 3)

The electrode for secondary batteries according to Technique 2, further including a coating layer covering an end portion of the electrode having the gap,
wherein the coating layer covers an opening of the gap.

### (Technique 4)

The electrode for secondary batteries according to any one of Techniques 1 to 3, wherein respective protrusion lengths L of the end portions of the first electrode mixture layer and the second electrode mixture layer from the end portion of the electrode current collector is 20 µm or more.

### (Technique 5)

The electrode for secondary batteries according to any one of Techniques 1 to 4, wherein given that TE represents a thickness of the end portion of the electrode current collector and TC represents a thickness of a portion of the electrode current collector that is located inside the end portion thereof, TE is larger than TC.

### (Technique 6)

A secondary battery including paired electrodes and an electrolyte,
wherein at least one of the paired electrodes is the electrode for secondary batteries according to any one of Techniques 1 to 5.

Hereinafter, the present disclosure is described further in detail based on examples. However, the present disclosure is not limited to the following examples.

### <<Secondary Batteries A1 to A3>>

### (Positive Electrode Production).

A positive electrode mixture slurry was prepared by mixing 100 parts by mass of LiCoO₂ being a positive electrode active material, 4 parts by mass of polyvinylidene fluoride (PVDF) being a binder, and an appropriate amount of N-methyl-2-pyrrolidone (NMP).

The obtained positive electrode mixture slurry was applied to both surfaces of an aluminum foil (thickness 15 µm) being a positive electrode current collector, and the resulting coated films was dried and rolled to form positive electrode mixture layers (thickness 148 µm). The resulting laminate of the positive electrode mixture layers and the positive electrode current collector was cut to obtain a band-shaped positive electrode.

### (Negative Electrode Production)

A negative electrode mixture slurry was prepared by mixing 100 parts by mass of natural graphite being a negative electrode active material, 1 part by mass of styrene-butadiene copolymer rubber (SBR) being a binder, 1 part by mass of sodium salt of carboxymethyl cellulose (CMC-Na) being a thickener, and an appropriate amount of water.

An electrolytic copper foil (thickness 8 µm) being a negative electrode current collector was prepared.

The obtained negative electrode mixture slurry was applied to both surfaces of the electrolytic copper foil (current collector sheet 111 in FIG. 4), and the resulting coated films were dried at 110°C and rolled using a roller to form negative electrode mixture layers (thickness 148 µm). Thus, a laminate of the negative electrode mixture layers and the copper foil was obtained. The laminate was cut into a band shape by slitting. Thereafter, the opposite end portions (both end portions 112a in FIG. 4) of the copper foil in the widthwise direction were cut off along perforations formed in advance in the copper foil. As a result, a band-shaped negative electrode (electrode 10 in FIG. 1) was produced, having gaps at the opposite end portions of the band-shaped laminate in the widthwise direction, the gaps being formed by the end portions of the negative electrode mixture layers protruding beyond the end portion of the negative electrode current collector at the respective end portions of the band-shaped laminate in the widthwise direction.

The width of portions to be cut off at both end portions of the copper foil (width of both end portions 112a in FIG. 4) was appropriately adjusted so that the protrusion length L of the end portions of the negative electrode mixture layers from the end portion of the negative electrode current collector was set to any of the values shown in Table 1. The thickness TE of each end portion of the negative electrode current collector was approximately the same as the thickness TC of the portion inside the end portion of the negative electrode current collector, and was 8 µm. The ratio: L/TE of the protrusion length L to the thickness TE of the end portion of the negative electrode current collector was the corresponding one of the values shown in Table 1.

### (Nonaqueous Electrolyte Preparation)

A nonaqueous electrolyte was prepared by dissolving LiPF₆ at a concentration of 1 mol/liter in a mixed solvent of ethylene carbonate (EC), dimethyl carbonate (DMC), and ethyl methyl carbonate (EMC) in a volume ratio of 1:1:1. Vinylene carbonate was contained in the nonaqueous electrolyte in an amount of 3 wt%.

### (Battery Fabrication)

One end of an aluminum-made positive electrode lead was attached to the current collector exposed portion (portion where the mixture layer is not formed) of the positive electrode obtained above. One end of a nickel-made negative electrode lead was attached to the current collector exposed portion (portion where the mixture layer is not formed) of any of the negative electrodes obtained above. A wound electrode group was formed by winding the positive electrode and the negative electrode with a separator interposed therebetween. A polyethylene-made microporous film was used as the separator. The electrode group was housed in a bottomed cylindrical battery case serving also as a negative electrode terminal. In doing so, an upper insulating plate and a lower insulating plate were arranged at the upper part and the lower part of the electrode body, respectively. Next, after injecting the nonaqueous electrolyte into the battery case, the opening of the battery case was closed by placing a metal-made sealing body serving also as a positive electrode terminal at the opening of the battery case. In doing so, a resin-made insulating gasket was interposed between the sealing body and the opening end of the battery case. The other end of the positive electrode lead was connected to the sealing body, and the other end of the negative electrode lead was connected to the inner bottom surface of the battery case. In the manner described above, cylindrical nonaqueous electrolyte secondary batteries (diameter 18 mm, height 65 mm) were fabricated.

### <<Secondary Battery B1>>

In the negative electrode production, after the laminate was cut into the band shape by slitting, the opposite end portions of the copper foil in the widthwise direction were not cut off. In other words, no gaps were provided at the opposite end portions of the negative electrode in the widthwise direction. Except for the above, a secondary battery B1 was fabricated in the same manner as the secondary battery A1.

### [Evaluation]

The following evaluations were performed on each of the batteries.

### (Cycle Test)

With respect to each of the obtained batteries, charging and discharging were repeated for 500 cycles under the following conditions.

The cycle test was performed in an environment at 25°C. The pause period between charging and discharging was 20 minutes.

### (Charging)

Constant current charging was performed at a current of 700 mA until the voltage reached 4.2 V, and constant voltage charging was then performed at a voltage of 4.2 V until the current reached 35 mA.

### (Discharging)

Constant current discharging was performed at a current of 700 mA until the voltage reached 3 V.

The proportion of the discharge capacity at the 500^{th} cycle to the discharge capacity at the first cycle was determined as the capacity retention rate at the 500^{th} cycle.

### (Thickness Change and Expansion Rate of Negative Electrode)

With respect to each of the obtained batteries, charging was performed under the above conditions to obtain a battery in an initial charged state. Using a CT image of a cross section of the battery, the cross section of the electrode group was observed. The thickness at any 10 points of the initial negative electrode was measured, and their average value was calculated to obtain an initial negative electrode thickness T0.

With respect to each of the batteries after the 500^{th} cycle, charging was performed under the above conditions to obtain a battery in a charged state after the 500^{th} cycle. A negative electrode thickness T1 after the 500 cycles was determined in the same manner as above.

T1 - T0 was determined as a thickness change. (T1 - T0)/T0 × 100 was determined as the expansion rate. When stress caused by expansion of an electrode mixture layer is relieved, the thickness change of the electrode between before and after the cycle test is small.

### (Short-Circuit Defect Rate)

For each of the batteries, 1000 batteries were fabricated, and the above cycle test for 500 cycles was performed. After the 500^{th} cycle, the presence or absence of buckling of the negative electrode on the inner peripheral side of the electrode group was checked for each of the batteries by X-ray inspection. Batteries in which buckling of the negative electrode occurred were determined to be short-circuited. Based on the results of examining whether short circuits were present or absent in the 1000 batteries, the short-circuit defect rate (predicted value) was calculated using the process capability index.

The evaluation results are shown in Table 1. In Table 1, A1 to A3 are examples, and B1 is a comparative example.

**[Table 1]**

| Secondary | Protrusion length L of end | L/TE | Capacity | Thickness | Expansion | Short-circuit |
|---|---|---|---|---|---|---|
| battery | portions of negative electrode mixture layers from end portion of negative electrode current collector (µm) | | retention rate (%) | change (mm) | rate (%) | defect rate (ppm) |
| B1 | 0 | 0 | 70 | 0.50 | 10 | 5 |
| A1 | 20 | 20/8 | 78 | 0.33 | 7 | 0.5 or less |
| A2 | 50 | 50/8 | 83 | 0.21 | 4 | 0.5 or less |
| A3 | 100 | 100/8 | 85 | 0.16 | 2 | 0.5 or less |

Compared to the secondary battery B1, the thickness change, expansion rate, and short-circuit defect rate were small and the capacity retention rate was significantly improved in the secondary batteries A1 to A3.

### [Industrial Applicability]

The secondary battery according to the present disclosure is useful as a main power source, for example, for mobile communication devices, portable electronic devices, and electric vehicles.

Although the present invention has been described in terms of the presently preferred embodiments, it is to be understood that such a disclosure is not to be interpreted as limiting. Various alterations and modifications will no doubt become apparent to those skilled in the art to which the present invention pertains, after having read the above disclosure. Accordingly, it is intended that the appended claims be interpreted to cover all alterations and modifications as fall within the true spirit and scope of the invention.

### [Reference Signs List]

1: Electrode group, 2: Positive electrode lead, 3: Negative electrode lead, 4: Battery case, 5: Sealing plate, 6: Negative electrode terminal, 7: Gasket, 8: Sealing plug, 10: Electrode, 11: Electrode current collector, 12a, 12b: Electrode mixture layer, 13: Gap, 14: Coating layer

## Claims

1. An electrode for secondary batteries, comprising:
an electrode current collector having a sheet shape; a first electrode mixture layer supported on one main surface of the electrode current collector; and a second electrode mixture layer supported on another main surface of the electrode current collector, wherein
at least one end portion of the electrode includes end portions of the first electrode mixture layer and the second electrode mixture layer and an end portion of the electrode current collector, and
the end portions of the first electrode mixture layer and the second electrode mixture layer each protrude beyond the end portion of the electrode current collector.

2. The electrode for secondary batteries according to claim 1,
wherein a gap is formed between the end portion of the first electrode mixture layer and the end portion of the second electrode mixture layer.

3. The electrode for secondary batteries according to claim 2, further comprising
a coating layer covering an end portion of the electrode having the gap,
wherein the coating layer covers an opening of the gap.

4. The electrode for secondary batteries according to any one of claims 1 to 3,
wherein respective protrusion lengths L of the end portions of the first electrode mixture layer and the second electrode mixture layer from the end portion of the electrode current collector is 20 µm or more.

5. The electrode for secondary batteries according to any one of claims 1 to 3,
wherein given that TE represents a thickness of the end portion of the electrode current collector and TC represents a thickness of a portion of the electrode current collector that is located inside the end portion thereof, TE is larger than TC.

6. A secondary battery comprising:
paired electrodes; and an electrolyte,
wherein at least one of the paired electrodes is the electrode for secondary batteries according to any one of claims 1 to 3.
